# EUROPEAN PATENT SPECIFICATION

(11) **EP 0 598 743 B1**
(45) Date of publication and mention of the grant of the patent: **07.04.1999**
(21) Application number: 92914437.6
(22) Date of filing: 26.06.1992
(51) Int. Cl.: B60P 1/64, B62D 21/08

(54) **LOAD CARRIER/LOAD CARRIER BODY**
LASTTRÄGER UND LASTTRÄGERSTRUKTUR
PORTE-CHARGE ET SA STRUCTURE

(43) Date of publication of application: 01.06.1994
(73) Proprietor: SAMUELSSON, Robin, S-310 58 Vessigebro (SE)
(72) Inventor: SAMUELSSON, Robin, S-310 58 Vessigebro (SE)
(74) Representative: Eriksson, Hans Gustaf
(86) International application number: SE9200479
(87) International publication number: WO9300230

(56) References cited:
- EP-A- 0 001 176
- AU-A- 1 527 876
- CH-A- 150 501
- DK-B- 159 762
- FI-B- 82 646
- FR-A- 2 109 599
- SE-B- 429 526
- US-A- 3 398 850

## Description

The present invention relates to a load carrier body of the kind referred to in the preamble of claim 1. The use of load carriers in shape of containers is increasing. One of the advantages with containers is that they easily can be lifted onto or pulled of different kinds of vehicles. The vehicle itself doesn't have to be present at the loading and the unloading of the container, but is free to be used for other transportation purposes. Today containers are often built as a self-supporting units, i.e. the sides and the bottom of the containers are forming parts of the load-supporting construction.

Of decisive importance for the term of life of constructions being subjected to cyclic loads is a correct dimensioning regarding the fatigue of material. High quality and strong material will not be sufficient if cyclic loads leading to great stresses/concentrations of tensions are allowed to appear. Each loading and unloading of containers subject involves high concentrations of tensions as a container often is made very stiff. Also the covering steel walls of the container form part of the load supporting construction, which makes it possible to avoid concentrations of tensions. This is true also if the container is lifted in hooks or if it is pulled up onto a vehicle with a load exchanging arrangment. Thus what limits the life term of a container is the fatigue stresses during use.

The present invention suggests the use of a load carrier body or a roll on/roll of container.

The main object of the present invention is to obtain a load carrier body which is so constructed that high concentrations of stresses can be essentially avoided during use. Hereby a load carrier body is obtained having an increased load carrying capacity in comparision to its own weight.

This object is obtained according to the invention by a load carrier body having the characterizing clauses mentioned in the claim.

The invention will now be described in connection to shown embodiments, where,
Fig. 1 is a diagrammatic view of a load carrier body arranged as a roll on/roll of container and a lattice work reinforcement of the load exchanging frame, and
Fig. 2 is a load carrier body with a sidebuilding in form of lattice works,

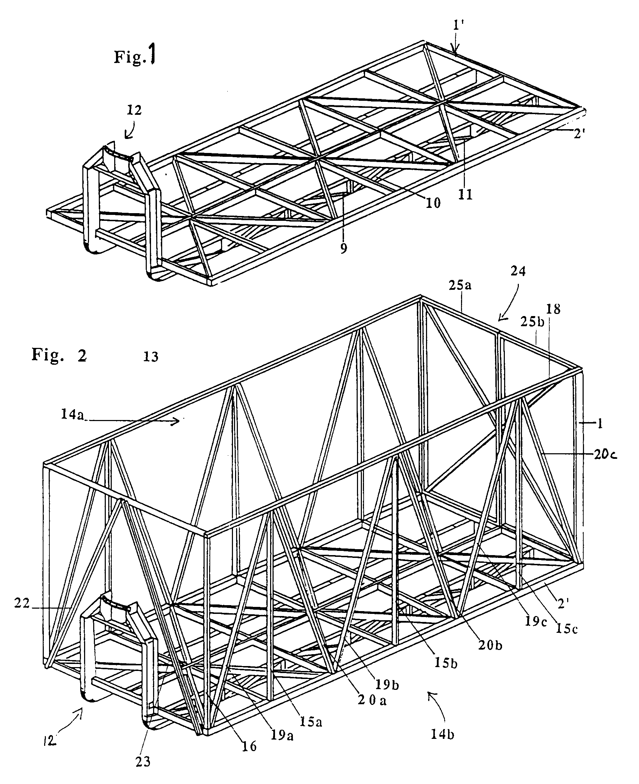

In fig. 1 a diagrammatic view of a load carrier/load carrier body is shown which is formed as a body of a roll on/roll of container, wherein at the same time a lattice work reinforcement 10,11 of the load exchanging frame 9 is shown and which has the conventional arrangement 12 for attachement to a load exchanging frame at a load exchanging veichle. Thus the load exchanging frame 9 has a lattice work reinforced bar, preferably an U-bar, which according to its weight will have an essentially encreased load carrying capacity. Thus the load will be distributed by the lattice work reinforced rim, which essentially will prohibit the appearance of stress concentrations. When the lattice work reinforced rim is used at the load carrying frames for roll on/roll of containers, the advantages will be obvious as a load exchanging frame will be exposed to such alternating and great loads that up til now high stress concentrations leading to fatigue cracks and short term of life have hardly been possible to avoid.

In fig. 2 an upper building 13 at the load carrier/load carrier body is shown. The sides 14a and 14b are symmetrical and have vertical posts 15a - c, foreward and rearward corner posts 16 and 17, respectively, and an upper profile portion 18, and cross bar profiles 19a - c and 20a - c, respectively. At the front part there are also cross bar profiles 22 and 23 and at the rear side there are two openable doors 25a - b.

The invention is not restricted to the above shown embodiments but modifications can be done within the scoop of the appended claims.

## Claims

1. Load carrier body for a roll on/roll off container, the load carrier body having side walls in the form of load distributing lattice works, characterized in that the load carrier body contains a load exchanging frame (9) consisting of two separate and parallel U-bars, the top and bottom ribs of each U-bar being reinforced by lattice works (10,11).

## Patentansprüche

1. Lastträgerstruktur für einen Roll-on/Roll-off-Container, wobei die Lastträgerstruktur Seitenwände in Form von lastverteilenden Gitterwerken hat,
**dadurch gekennzeichnet**,
daß die Lastträgerstruktur einen Lastwechselrahmen (9) umfaßt, der aus zwei getrennten und parallelen U-Trägern besteht, wobei die oberen und unteren Rippen jedes U-Trägers durch Gitterwerke (10, 11) verstärkt sind.

## Revendications

1. Construction d'un porte-charge pour conteneur, de type "roll on/ roll off", la construction du porte-charge ayant des parois latérales en forme de treillis qui répartissent les charges, **caractéristique** en ce que la construction du porte-charge contient un cadre (9) qui échange les charges, consistant de deux poutrelles en U séparées et parallèlles dont les brides supérieures et inférieures sont armées de treillis (10,11)
